# EUROPEAN PATENT APPLICATION

(11) **EP 4 592 151 A1**
(43) Date of publication of application: **30.07.2025**
(21) Application number: 23884647.1
(22) Date of filing: 24.10.2023
(51) Int. Cl.: B60T 13/68, B60T 13/74, B60T 13/66, B60T 8/40, B60T 8/36

(54) **AUTOMOBILE HYDRAULIC BRAKE-BY-WIRE SYSTEM AND CONTROL METHOD THEREFOR**

(30) Priority: 02.11.2022 CN 202211363593
(71) Applicant: Wuhu Bethel Electronic Control System Co., Ltd., Wuhu, Anhui 241008 (CN)
(72) Inventor: XU, Wenquan, Wuhu, Anhui 241008 (CN); BAO, Bingbing, Wuhu, Anhui 241008 (CN); ZHANG, Sheng, Wuhu, Anhui 241008 (CN); LIN, Xinchun, Wuhu, Anhui 241008 (CN)
(74) Representative: Canzler & Bergmeier Patentanwälte Partnerschaft mbB
(86) International application number: PCT/CN2023/126114
(87) International publication number: WO 2024/093715

(57) **Abstract**

An automobile hydraulic brake-by-wire system and a control method thereof. The automobile hydraulic brake-by-wire system comprises a liquid storage tank (1), and a pedal feel control oil path and a boosted brake control oil path which are connected to the liquid storage tank (1). The pedal feel control oil path is connected in parallel with the boosted brake control oil path by means of a decoupling isolation solenoid valve (4), and the pedal feel control oil path comprises a single-cavity main cylinder (2) and a pedal feel simulator (3) which are connected by means of an oil path.

## Description

### FIELD OF THE INVENTION

The present invention relates to the technical field of automobile braking systems, in particular to an automobile hydraulic brake-by-wire system and a control method thereof.

### BACKGROUND OF THE INVENTION

Along with the development of intelligent and autonomous driving in the automobile industry, automobile manufacturers are deepening their research into intelligent driving and autonomous driving. As a crucial component of autonomous driving, brake-by-wire has experienced rapid development in this context.

Existing hydraulic brake-by-wire systems face several challenges. First, a main cylinder typically adopts a dual-cavity output configuration, under the same arrangement space, this main cylinder is shorter in stroke, with both cavities subjected to hydraulic pressure. When the main cylinder operates, it needs to cross two idle strokes, thereby resulting in fluctuations in the pedal feel and increasing the complexity of the braking system structure. Second, in the existing braking manner, a pressure cylinder is adopted for pressure-boosted braking. However, when pressure-boosted braking malfunctions, effective braking cannot be achieved, compromising safety. Third, during brake release, brake drag often occurs, adversely impacting vehicle restart, acceleration, and coasting, thereby ultimately causing unnormal operation of vehicles.

### SUMMARY OF THE INVENTION

The present invention provides an automobile hydraulic brake-by-wire system and a control method thereof, thereby reducing the structural complexity of the braking system, avoiding fluctuations in the pedal feel, and realizing reliable braking.

Technical solutions adopted by the present invention to solve the technical problem are as follows: the automobile hydraulic brake-by-wire system comprises a liquid storage tank, and a pedal feel control oil path and a pressure-boosted brake control oil path which are connected with the liquid storage tank. The pedal feel control oil path is connected in parallel with the pressure-boosted brake control oil path via one or more decoupling isolation solenoid valves, and the pedal feel control oil path comprises a single-cavity main cylinder and a pedal feel simulator connected through an oil path.

The pressure-boosted brake control oil path comprises a brushless motor and a pressure cylinder in transmission connection with the brushless motor, an oil port of the pressure cylinder is connected with a plurality of pressure-boosted oil paths through one or more pressure supply oil paths, the plurality of pressure-boosted oil paths are connected with the liquid storage tank through pressure relief oil paths, and an outlet of each of the plurality of pressure-boosted oil paths is connected with a corresponding wheel-end brake.

Each of the pressure supply oil paths is provided with a pressure supply solenoid valve, each of the pressure-boosted oil paths is provided with a pressure-boosted solenoid valve, and each of the pressure relief oil paths is provided with a pressure relief solenoid valve.

The oil port of the pressure cylinder is connected with the liquid storage tank through a liquid replenishment oil path, and the liquid replenishment oil path is internally provided with a liquid inlet electronically controlled valve or a check valve. A first pressure sensor is mounted at the oil port of the pressure cylinder.

One or more decoupling isolation oil paths are connected between the pedal feel control oil path and the pressure-boosted brake control oil path, and each of the decoupling isolation oil paths is provided with one decoupling isolation solenoid valve. The decoupling isolation oil paths are connected in parallel with the pressure supply oil paths in a one-to-one correspondence, and the decoupling isolation oil paths are connected in series with the plurality of pressure-boosted oil paths.

A second pressure sensor is connected between the single-cavity main cylinder and the decoupling isolation solenoid valves, between the pedal feel simulator and the decoupling isolation solenoid valves, or between the single-cavity main cylinder and the pedal feel simulator.

The automobile hydraulic brake-by-wire system is configured with one decoupling isolation oil path, and an outlet of the decoupling isolation oil path is connected to wheel-end brakes through four pressure-boosted oil paths.

The automobile hydraulic brake-by-wire system is configured with two decoupling isolation oil paths and two pressure supply oil paths, and each of the decoupling isolation oil paths is provided with one decoupling isolation solenoid valve, each of the decoupling isolation oil paths is connected in parallel with a corresponding pressure supply oil path, and an outlet of each of the decoupling isolation oil paths is connected to two pressure-boosted oil paths.

A simulator isolation solenoid valve is connected between the single-cavity main cylinder and the pedal feel simulator.

A control method for the above automobile hydraulic brake-by-wire system comprises control processes of basic braking, mechanical backup braking, and brake release.

The control process of basic braking is as follows: when a brake pedal is depressed, brake fluid flows to the pedal feel simulator through the second oil port of the single-cavity main cylinder, so as to generate the pedal feel, at which time, an ECU controller issues a pressure-boosted braking instruction to the pressure-boosted brake control oil path for wheel braking; simultaneously, the ECU controller controls the decoupling isolation solenoid valves to decouple and isolate a pedal feel generation process from a pressure-boosted braking process.

The control process of mechanical backup braking is as follows: when a failure occurs in the pressure-boosted brake control oil path, the decoupling isolation solenoid valves are in an open state; and when the brake pedal is pressurized and depressed, the brake fluid enters four pressure-boosted oil paths from a single-cavity main cylinder through the decoupling isolation oil paths for wheel braking.

The control process of brake release is as follows: when a brake pedal is released, brake fluid in a pedal feel simulator flows back to a single-cavity main cylinder, at which time, the ECU controller controls a piston of a pressure cylinder in the pressure-boosted brake control oil path to return to its original position and controls a liquid replenishment oil path to be closed, such that the brake fluid accelerates backflow into the pressure cylinder.

The present invention has the following beneficial effects:
1. In the present invention, a single-cavity main cylinder with a single-circuit hydraulic output cavity is adopted, the single-cavity main cylinder has a longer stroke and only needs to go through one idle stroke during operation. By adjusting the structure of the entire hydraulic brake-by-wire system, the complexity of the system is reduced, and the limitations of short stroke of the double-cavity main cylinder and fluctuations in the pedal feel are solved. Additionally, the single-cavity main cylinder is directly connected to the pedal feel simulator, thereby effectively reducing the complexity of the system, shortening the feedback time of the pedal feel, and solving the problem of delayed feedback of the pedal feel caused by throttling.
2. In the present invention, when a failure occurs during pressure-boosted braking, the decoupling isolation solenoid valve is controlled to power off and remain in an open state. Once the brake pedal is pressurized and depressed, the brake fluid in the single-cavity main cylinder enters four wheel brakes through four pressure-boosted oil paths, respectively, thereby realizing mechanical backup braking and ensuring effective braking.
3. In the present invention, during a brake release process, by closing a liquid inlet solenoid valve in a liquid replenishment oil path connected to a pressure cylinder, brake fluid in a liquid storage tank cannot be timely replenished to the pressure cylinder, thereby generating negative pressure in the pressure cylinder, accelerating retraction of the brake wheel cylinders and effectively reducing the problem of brake drag.

### BRIEF DESCRIPTION OF DRAWINGS

A brief description is given below on the content expressed in each of the accompanying drawings and the markings in the drawings in the specification of the present invention:
FIG. 1 is a structural schematic diagram of Embodiment I of an automobile hydraulic brake-by-wire system of the present invention;
FIG. 2 is a structural schematic diagram of Embodiment II of an automobile hydraulic brake-by-wire system of the present invention;
FIG. 3 is a schematic diagram showing the control of basic braking in Embodiment I of the present invention; and
FIG. 4 is a schematic diagram showing the control of mechanical backup braking in Embodiment I of the present invention.

Reference numerals: 1. liquid storage tank, 2. single-cavity main cylinder, 3. pedal feel simulator, 4. decoupling isolation solenoid valve, 5. brushless motor, 6. pressure cylinder, 7. pressure supply oil path, 8. pressure-boosted oil path, 9. pressure relief oil path, 10. wheel-end brake, 11. pressure supply solenoid valve, 12. pressure-boosted solenoid valve, 13. pressure relief solenoid valve, 14. liquid replenishment oil path, 15. liquid inlet electronically controlled valve, 16. check valve, 17. first pressure sensor, 18. decoupling isolation oil path, 19. second pressure sensor, 20. simulator isolation solenoid valve, 21. ECU controller, 22. brake pedal.

### DETAILED DESCRIPTION OF THE INVENTION

In order to make the objectives, technical solutions and advantages of the embodiments of the present invention clearer, the technical solutions in the embodiments will be clearly and completely described below in combination with the accompanying drawings in the embodiments of the present invention. The following embodiments are used to illustrate the present invention but shall not be used to restrict the scope of the present invention.

In the description of the present invention, it should be noted that the orientation or positional relationships indicated by the terms "upper", "lower", "front", "rear", "left", "right", "vertical", "inner", "outer" are based on the orientation or positional relationships shown in the accompanying drawings, such terms are merely for the convenience of describing the present invention and simplifying the description, rather than indicating or implying that the device or element referred to must have a specific orientation, and must be constructed and operated in a specific orientation.

In the description of the present invention, it should be noted that, unless otherwise clearly specified and limited, the terms "install", "connected", and "connection" should be understood in a broad sense. For example, the connection may be a fixed connection, a detachable connection, or an integral connection; it may be a mechanical connection or an electrical connection; it may be a direct connection or an indirect connection through an intermediate medium. For those skilled in the art, specific meanings of the above terms in the present invention can be understood according to specific situations.

The present invention illustrates specific embodiments through the following embodiments.

### Embodiment I

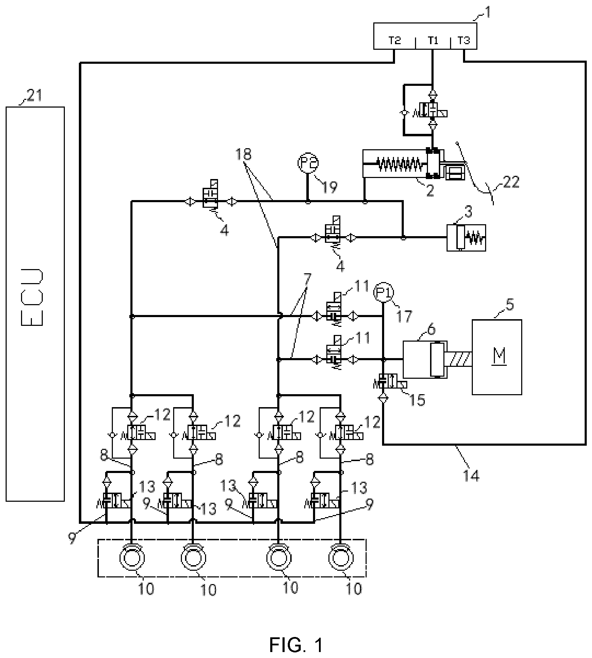

As shown in FIG. 1, an automobile hydraulic brake-by-wire system comprises a liquid storage tank 1, and a pedal feel control oil path and a pressure-boosted brake control oil path which are connected with the liquid storage tank 1. The pedal feel control oil path is connected in parallel with pressure-boosted brake control oil paths through decoupling isolation solenoid valves 4, and the pedal feel control oil path is decoupled and isolated from the pressure-boosted brake control oil path through the decoupling isolation solenoid valves 4, thereby ensuring independence of pedal feel generation and boosted braking and enabling stability of operation. The pedal feel control oil path comprises a single-cavity main cylinder 2 and a pedal feel simulator 3 connected through an oil path. The single-cavity main cylinder 2 has only one cavity with two oil ports (or, oil outlets), referred to as a first oil port and a second oil port, respectively. The first oil port is connected to the liquid storage tank 1, and the second oil port is connected to the pedal feel simulator 3 and the pressure-boosted brake control oil path. The single-cavity main cylinder 2 has a long stroke and only needs to go through one idle stroke during operation, thereby reducing the complexity of the system, and solving the problems of short stroke of the double-cavity main cylinder and fluctuations in the pedal feel. The single-cavity main cylinder 2 is directly connected to the pedal feel simulator 3, so as to effectively reduce the complexity of the system, shorten the feedback time of the pedal feel, and solve the problem of delayed feedback of the pedal feel caused by throttling.

Specifically, the pressure-boosted brake control oil path comprises a brushless motor 5 and a pressure cylinder 6 in transmission connection with the brushless motor 5 through a speed reduction mechanism. The brushless motor 5 is internally provided with a position sensor to detect the operating position of the brushless motor 5, an oil port of the pressure cylinder 6 is connected to a plurality of pressure-boosted oil paths 8 through pressure supply oil paths 7. As an example, four pressure-boosted oil paths 8 are arranged, and these four pressure-boosted oil paths 8 are connected to wheel-end brakes 10 accordingly. The brushless motor 5 drives a piston rod of the pressure cylinder 6 to extend, such that brake fluid (pressure-boosted brake fluid or high-pressure brake fluid) within the pressure cylinder 6 enters the plurality of pressure-boosted oil paths 8 through the pressure supply oil paths 7 and then enters the wheel-end brakes 10 to enable the brake to perform a braking action. The plurality of pressure-boosted oil paths 8 are connected to the liquid storage tank 1 through pressure relief oil paths 9, so as to adjust a first oil pressure in the pressure-boosted brake control oil path. Each of the pressure supply oil paths 7 is provided with a pressure supply solenoid valve 11, each of the pressure-boosted oil paths 8 is provided with a pressure-boosted solenoid valve 12, and each of the pressure relief oil paths 9 is provided with a pressure relief solenoid valve 13. A first pressure sensor 17 is mounted at the oil port of the pressure cylinder 6 to detect whether the first oil pressure is within a set range. The first pressure sensor 17 is connected to a signal input end of an Electronic Control Unit (ECU) controller 21, and a signal output end of the ECU controller 21 is connected to the brushless motor 5, the pressure supply solenoid valves 11, the pressure-boosted solenoid valves 12, and the pressure relief solenoid valves 13. When the first oil pressure in the pressure-boosted brake control oil path is too high or too low, the ECU controller 21 adjusts the first oil pressure by controlling the operating stroke of the brushless motor 5 or controlling the opening and closing of the pressure relief solenoid valves 13.

Specifically, the oil port of the pressure cylinder 6 is connected to the liquid storage tank 1 through a liquid replenishment oil path 14. A liquid inlet electronically controlled valve 15 is arranged in the liquid replenishment oil path 14. During brake release, the brushless motor 5 operates in an opposite direction, such that the brake fluid in the wheel-end brakes 10 flows back into the pressure cylinder 6, at which time, the liquid inlet electronically controlled valve 15 is controlled to be closed, and the liquid replenishment oil path 14 is cut off, such that the brake fluid in the liquid storage tank 1 cannot be timely replenished to the pressure cylinder 6, and negative pressure is generated in the pressure cylinder 6, thereby accelerating the retraction of the brake wheel cylinders, and effectively reducing the problem of brake drag.

Specifically, decoupling isolation oil paths 18 are arranged between the pedal feel control oil path and the pressure-boosted brake control oil path. each of the decoupling isolation oil paths 18 is provided with one decoupling isolation solenoid valve 4, and is connected in parallel with a corresponding pressure supply oil path 7. The decoupling isolation oil paths 18 are connected in series with the pressure-boosted oil paths 8. During pressure-boosted braking, the decoupling isolation solenoid valves 4 are closed, so as to decouple and isolate a pressure-boosting process of the brake from a pedal feel generation process and isolate the circuit of the main cylinder from the circuit of the pressure cylinder 6, thereby ensuring stability of the pedal feel and pressure-boosted braking. When a failure occurs during pressure-boosted braking, the decoupling isolation solenoid valves 4 are opened, and the brake pedal is pressurized and depressed, such that the brake fluid can flow from the single-cavity main cylinder 2 into the four pressure-boosted oil paths 8 through the decoupling isolation oil paths 18, enabling reliable wheel barking.

Specifically, a second pressure sensor 19 is connected between the single-cavity main cylinder 2 and the decoupling isolation solenoid valves 4, between the pedal feel simulator 3 and the decoupling isolation solenoid valves 4, or between the single-cavity main cylinder 2 and the pedal feel simulator 3, so as to detect a second oil pressure in the pedal feel control oil path. The single-cavity main cylinder 2 is internally provided with a stroke sensor for stroke detection. The stroke sensor and the second pressure sensor 19 are connected to the single-cavity main cylinder 2, the pressure-boosted solenoid valves 12 and the pressure relief solenoid valves 13 through the ECU controller 21. During basic braking (i.e., during pedal feel generation and normal pressure-boosted braking), when the second oil pressure is too high or too low, the ECU controller 21 controls the movement of a piston rod of the single-cavity main cylinder 2 to adjust the second oil pressure within a set range. During mechanical backup braking, when the second oil pressure in the pedal feel control oil path is too high or too low, the ECU controller 21 controls the movement of the piston rod of the single-cavity main cylinder 2 or controls the opening of the pressure relief solenoid valves 13 to adjust the second oil pressure.

As an example, the automobile hydraulic brake-by-wire system has two decoupling isolation oil paths 18 and two pressure supply oil paths 7, and each of the decoupling isolation oil paths 18 is configured with one decoupling isolation solenoid valve 4 and is connected in parallel with one pressure supply oil path 7. An outlet of each decoupling isolation oil path 18 is connected to two pressure-boosted oil paths 8. The second oil port of the single-cavity main cylinder 2 is connected to these two pressure-boosted oil paths 8 respectively through said two decoupling isolation oil paths 18. Two pressure supply oil paths 7 connected to the two decoupling isolation oil paths 18 are connected in parallel and then are connected to the oil port of the pressure cylinder 6, that is, the four pressure-boosted oil paths 8 are supplied with the brake fluid through the two pressure supply oil paths 7, improving the braking efficiency.

As an example, the automobile hydraulic brake-by-wire system has one decoupling isolation oil path 18 and one pressure supply oil path 7. An outlet of the decoupling isolation oil path 18 is connected to the wheel-end brakes 10 through four pressure-boosted oil paths 8, and the four pressure-boosted oil paths 8 are supplied with the brake fluid through said pressure supply oil path 7, thereby further simplifying the structure of the system.

The control method for the above automobile hydraulic brake-by-wire system comprises control processes of basic braking, mechanical backup braking, and brake release.

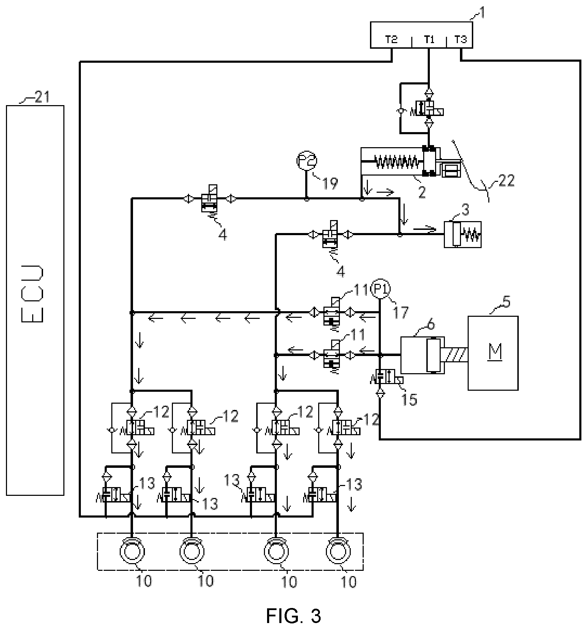

As shown in FIG. 3, the control process of basic braking is as follows: when a brake pedal 22 is depressed, the brake fluid flows from the second oil port of the single-cavity main cylinder 2 to the pedal feel simulator 3, so as to generate the pedal feel, at which time, the ECU controller 21 issues a pressure-boosted braking instruction to the pressure-boosted brake control oil path, such that the brushless motor 5 drives the pressure cylinder 6 to act, and the brake fluid within the pressure cylinder 6 enters four pressure-boosted oil paths 8 simultaneously from the pressure supply oil paths 7, and then enters the wheel-end brakes 10, enabling wheel braking; simultaneously, the ECU controller 21 controls the decoupling isolation solenoid valves 4 to be closed, and decouples and isolates the pedal feel generation process from the pressure-boosted braking process.

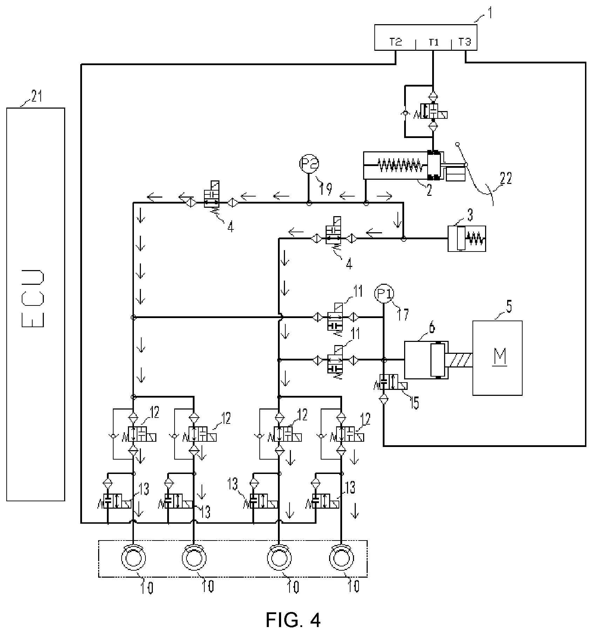

As shown in FIG. 4, the control process of mechanical backup braking is as follows: when a failure occurs in the pressure-boosted brake control oil path, the decoupling isolation solenoid valves 4 are in an open state; and when the brake pedal 22 is pressurized and depressed, the brake fluid enters four pressure-boosted oil paths 8 from the single-cavity main cylinder 2 through the decoupling isolation oil paths 18, enabling wheel braking.

The control process of brake release (opposite to a flow direction of the brake fluid in the system shown in FIG. 3) is as follows: when the brake pedal 22 is released, brake fluid in the pedal feel simulator 3 flows back to the single-cavity main cylinder 2, at which time, the ECU controller 21 controls the piston of the pressure cylinder 6 to return to its original position and controls the liquid replenishment oil path 14 to be closed, such that negative pressure is generated in the pressure cylinder 6, enabling the brake fluid to accelerate backflow into the pressure cylinder 6, thereby accelerating retraction of the brake wheel cylinders and effectively reducing the problem of brake drag.

### Embodiment II

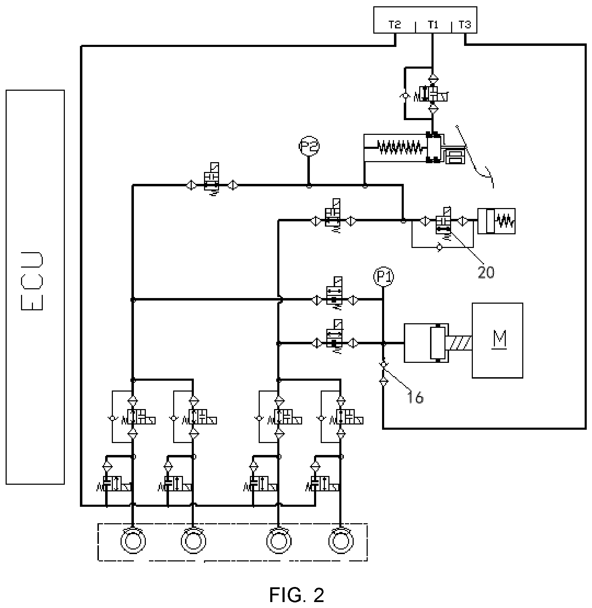

As shown in FIG. 2, Embodiment II differs from Embodiment 1 in that a simulator isolation solenoid valve 20 is arranged in the oil path between the single-cavity main cylinder 2 and the pedal feel simulator 3. During mechanical backup braking, the simulator isolation solenoid valve 20 prevents the brake fluid in the single-cavity main cylinder 2 from entering the pedal feel simulator 3, thereby making the mechanical backup braking more rapid. The liquid inlet electronically controlled valve 15 in the liquid replenishment oil path 14 is replaced with a check valve 16. During brake release, the check valve 16 enables the brake fluid to be actively and timely replenished into the pressure cylinder 6, thereby ensuring smooth return of the pressure cylinder 6.

### Embodiment III

Embodiment **III** differs from Embodiment I (not shown) in that a simulator isolation solenoid valve 20 is arranged in the oil path between the single-cavity main cylinder 2 and the pedal feel simulator 3. During mechanical backup braking, the simulator isolation solenoid valve 20 prevents the brake fluid in the single-cavity main cylinder 2 from entering the pedal feel simulator 3, thereby making mechanical backup braking more rapid.

### Embodiment IV

Embodiment **IV** differs from Embodiment I (not shown in the figure) in that the liquid inlet electronically controlled valve 15 in the liquid replenishment oil path 14 is replaced with a check valve 16. During brake release, the check valve 16 enables the brake fluid to be actively and timely replenished into the pressure cylinder 6, thereby ensuring smooth return of the pressure cylinder 6.

In conclusion, the presently disclosed system reduces the structural complexity of the braking system, solves the problem of fluctuations in the pedal feel, and realizes reliable braking.

The above descriptions merely illustrate some principles of the present invention with diagrams, this specification is not intended to restrict the present invention to the described specific structures and application scopes. Therefore, all possible corresponding modifications and equivalents that can be utilized shall all fall within the scope of the present invention.

## Claims

1. An automobile hydraulic brake-by-wire system, comprising a liquid storage tank, a pedal feel control oil path, and a pressure-boosted brake control oil path, wherein the pedal feel control oil path and the pressure-boosted brake control oil path are connected with the liquid storage tank, wherein the pedal feel control oil path is connected in parallel with the pressure-boosted brake control oil path via one or more decoupling isolation solenoid valves, and the pedal feel control oil path comprises a single-cavity main cylinder and a pedal feel simulator connected through an oil path.

2. The automobile hydraulic brake-by-wire system according to claim 1, wherein the pressure-boosted brake control oil path comprises a brushless motor and a pressure cylinder in transmission connection with the brushless motor, wherein an oil port of the pressure cylinder is connected with pressure-boosted oil paths through one or more pressure supply oil paths, the pressure-boosted oil paths are connected with the liquid storage tank through pressure relief oil paths, and an outlet of each of the pressure-boosted oil paths is connected with a corresponding wheel-end brake.

3. The automobile hydraulic brake-by-wire system according to claim 2, wherein each of the pressure supply oil paths is provided with a pressure supply solenoid valve, each of the pressure-boosted oil paths is provided with a pressure-boosted solenoid valve, and each of the pressure relief oil paths is provided with a pressure relief solenoid valve.

4. The automobile hydraulic brake-by-wire system according to claim 2, wherein the oil port of the pressure cylinder is connected with the liquid storage tank through a liquid replenishment oil path, and the liquid replenishment oil path is internally provided with a liquid inlet electronically controlled valve or a check valve; wherein a first pressure sensor is mounted at the oil port of the pressure cylinder.

5. The automobile hydraulic brake-by-wire system according to claim 2, wherein one or more decoupling isolation oil paths are connected between the pedal feel control oil path and the pressure-boosted brake control oil path, and each of the decoupling isolation oil paths is provided with one decoupling isolation solenoid valve; wherein the decoupling isolation oil paths are connected in parallel with the pressure supply oil paths in a one-to-one correspondence, and the decoupling isolation oil paths are connected in series with the pressure-boosted oil paths.

6. The automobile hydraulic brake-by-wire system according to claim 5, wherein a second pressure sensor is connected between the single-cavity main cylinder and the decoupling isolation solenoid valves, between the pedal feel simulator and the decoupling isolation solenoid valves, or between the single-cavity main cylinder and the pedal feel simulator.

7. The automobile hydraulic brake-by-wire system according to claim 5, wherein the automobile hydraulic brake-by-wire system is configured with one decoupling isolation oil path and one pressure supply oil path, and an outlet of the decoupling isolation oil path is connected to the wheel-end brakes through four pressure-boosted oil paths.

8. The automobile hydraulic brake-by-wire system according to claim 5, wherein the automobile hydraulic brake-by-wire system is configured with two decoupling isolation oil paths and two pressure supply oil paths are arranged, and each of the decoupling isolation oil paths is provided with one decoupling isolation solenoid valve, wherein each of the decoupling isolation oil paths is connected in parallel with a corresponding pressure supply oil path, and an outlet of each of the decoupling isolation oil paths is connected to two pressure-boosted oil paths.

9. The automobile hydraulic brake-by-wire system according to claim 5, wherein a simulator isolation solenoid valve is connected between the single-cavity main cylinder and the pedal feel simulator.

10. The automobile hydraulic brake-by-wire system according to claim 1, wherein the single-cavity main cylinder comprises one cavity with a first oil port and a second oil port, wherein the first oil port is connected to the liquid storage tank, and the second oil port is connected to the pedal feel simulator and the pressure-boosted brake control oil path.

11. A control method for the automobile hydraulic brake-by-wire system according to any one of claims 1 to 10, comprising control processes of basic braking, mechanical backup braking, and brake release, wherein
the control process of basic braking is as follows: when a brake pedal is depressed, brake fluid flows to the pedal feel simulator through the second oil port of the single-cavity main cylinder, so as to generate the pedal feel, at which time, an ECU controller issues a pressure-boosted braking instruction to the pressure-boosted brake control oil path for wheel braking; simultaneously, the ECU controller controls the decoupling isolation solenoid valves to decouple and isolate a pedal feel generation process from a pressure-boosted braking process;
the control process of mechanical backup braking is as follows: when a failure occurs in the pressure-boosted brake control oil path, the decoupling isolation solenoid valves are in an open state; and when the brake pedal is pressurized and depressed, the brake fluid enters four pressure-boosted oil paths from the single-cavity main cylinder through the decoupling isolation oil paths for wheel braking; and
the control process of brake release is as follows: when the brake pedal is released, brake fluid in the pedal feel simulator flows back to the single-cavity main cylinder, at which time, the ECU controller controls a piston of the pressure cylinder in the pressure-boosted brake control oil path to return to its original position and controls the liquid replenishment oil path to be closed, such that the brake fluid accelerates backflow into the pressure cylinder.
